# EUROPÄISCHE PATENTSCHRIFT

(11) **EP 2 786 683 B1**
(45) Veröffentlichungstag und Bekanntmachung des Hinweises auf die Patenterteilung: **24.02.2016**
(21) Anmeldenummer: 14161445.3
(22) Anmeldetag: 25.03.2014
(51) Int. Cl.: A47J 31/46

(54) **Dampferzeugungssystem für Haushalts-Gargerät**
System for generating steam for a domestic cooking device
Système de production de vapeur pour appareil ménager de cuisson

(30) Priorität: 02.04.2013 DE 102013205748
(43) Veröffentlichungstag der Anmeldung: 08.10.2014
(73) Patentinhaber: BSH Hausgeräte GmbH, 81739 München (DE)
(72) Erfinder: Arth, Joel, 67470 Schaffhouse-pres-Seltz (FR); Nagel, Martin, 67580 Forstheim (FR)

(56) Entgegenhaltungen:
- EP-A1- 0 041 485
- EP-A1- 0 523 278
- WO-A1-2011/080029
- WO-A2-2007/063503
- GB-A- 2 452 981

## Beschreibung

Die Erfindung betrifft ein Dampferzeugungssystem für ein Haushalts-Gargerät, aufweisend einen Wassertank und einen heizbaren Dampferzeugungsbehälter, welcher über eine Verbindungsleitung mit Wasser aus dem Wassertank nachfüllbar ist. Die Erfindung betrifft ferner ein Verfahren zum Bewegen von Wasser zwischen einem heizbaren Dampferzeugungsbehälter und einem damit fluidisch verbundenen Wassertank eines Haushalts-Gargeräts. Die Erfindung ist insbesondere anwendbar auf Dampfgargeräte.

Zur Bereitstellung von Dampf in einem Behandlungsraum eines Haushalts-Gargeräts, um Gargut damit zu behandeln, ist es bekannt, flüssiges Wasser in einem außerhalb des Garraums angeordneten, heizbaren Dampferzeugungsbehälter in Dampf umzuwandeln. Der Dampferzeugungsbehälter mag mit Wasser aus einem Wassertank nachfüllbar sein, und zwar mittels Pumpens des Wassers durch eine Verbindungsleitung oder, falls der Wassertank höher sitzt als der Dampferzeugungsbehälter, durch öffnen eines Ventils der Verbindungsleitung. Durch ein solches Dampferzeugungssystem wird Dampf, nicht Wasser, in den Garraum eingeleitet. Die Verwendung einer Wasserpumpe weist den Nachteil auf, dass sie verkalken kann und zudem vergleichsweise teuer ist. Die Verwendung nur eines Ventils weist beispielsweise den Nachteil auf, dass eine Dosierung des Wassers nicht fein einstellbar ist und zudem in dem Dampferzeugungsbehälter befindliches Wasser nicht mehr in den Wassertank zurückbewegbar ist.

Stand der Technik sind hier bspw. EP 0041485, WO2011/080029, EP 0523278, GB 2452581 oder WO 2007/063503.

Es ist die **Aufgabe** der vorliegenden Erfindung, die Nachteile des Standes der Technik zumindest teilweise zu überwinden.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Dampferzeugungssystem für ein Haushalts-Gargerät, aufweisend einen Wassertank und einen heizbaren Dampferzeugungsbehälter, welcher über eine Verbindungsleitung mit Wasser aus dem Wassertank nachfüllbar ist, wobei das Wasser mittels eines Luftdruckunterschieds zwischen dem Wassertank und dem Dampferzeugungsbehälter bewegbar ist. Dadurch braucht nicht das Wasser als solches mittels einer Wasserpumpe gefördert zu werden. Zudem ist durch die Erzeugung des Luftdruckunterschieds, umfassend Überdruck und/oder Unterdruck, auf einfache Weise eine Strömungsrichtung des Wassers einstellbar und damit eine Einstellung eines Wasserpegels in dem Dampferzeugungsbehälter. Unter einem Luftdruckunterschied kann insbesondere auch ein Druckunterschied von mit dem Dampf angereicherter Luft verstanden werden.

Das Haushalts-Gargerät mag beispielsweise ein Dampfgarer oder ein Backofen mit Dampfgarfunktion sein.

Der Wassertank kann auch als Wasserreservoir oder Wasserbehälter bezeichnet werden und stellt einen volumenartigen Aufnahmeraum für Wasser dar. Falls typischerweise das Wasser den Wassertank nicht vollständig füllt, verbleibt ein oberseitiger luftgefüllter Bereich. Der Wassertank mag z.B. durch das Haushalts-Gargerät mittels einer Frischwasserleitung oder manuell durch einen Nutzer gefüllt werden.

Der heizbare Dampferzeugungsbehälter mag auch als 'Boiler' bezeichnet werden und weist typischerweise unterseitig eine Heizung zur Erhitzung des darin befindlichen flüssigen Wassers auf, um dieses in Dampf umzuwandeln.

Der Dampferzeugungsbehälter ist über eine Verbindungsleitung mit Wasser aus dem Wassertank nachfüllbar. Der Dampferzeugungsbehälter und der Wassertank bzw. deren wassergefüllten Bereiche sind also mittels der Verbindungsleitung fluidisch miteinander verbindbar, insbesondere nach dem Prinzip kommunizierender Röhren.

Dass das Wasser mittels eines Luftdruckunterschieds zwischen dem Wassertank und dem Dampferzeugungsbehälter bewegbar ist, bedeutet insbesondere, dass in dem Wassertank oder in dem Dampferzeugungsbehälter ein Überdruck oder ein Unterdruck erzeugbar ist, mittels welchem Wasser aus dem Behälter (Wassertank, Dampferzeugungsbehälter) mit dem höheren Druck in den Behälter mit dem niedrigeren Druck gedrückt oder gesaugt wird. Grundsätzlich kann von Überdruck zu Unterdruck oder umgekehrt gewechselt werden, z.B. abhängig von einer gewünschten Strömungsrichtung des Wassers.

Es ist eine Ausgestaltung, dass das Dampferzeugungssystem mindestens eine Luftpumpe aufweist. Diese kann auf einfache Weise den Luftdruck in dem Wassertank und/oder dem Dampferzeugungsbehälter ändern, und zwar bei Anschluss an eine Druckseite einen Überdruck und bei Anschluss an eine Saugseite einen Unterdruck. Der gleiche Behälter, d.h. der Wassertank und/oder der Dampferzeugungsbehälter, mag mit nur einer Seite der Luftpumpe verbunden sein, was eine besonders einfache und robuste Ausgestaltung ergibt. Der gleiche Behälter mag alternativ wahlweise mit beiden Seiten der Luftpumpe verbindbar sein, was, zu verschiedenen Zeiten, eine Beaufschlagung mit Überdruck oder mit Unterdruck ermöglicht. Die Luftpumpe mag außerhalb ihres Betriebs, je nach Aufbau, luftdurchlässig oder luftundurchlässig sein.

Es ist noch eine Ausgestaltung, dass der Dampferzeugungsbehälter druckdicht und mit der Luftpumpe verbunden ist. Dadurch ist ein einfacher Aufbau eines Überdrucks oder eines Unterdrucks möglich. Dass der Dampferzeugungsbehälter druckdicht ist, mag beispielsweise bedeuten, dass zum Bewegen des Wassers in ihn oder aus ihm ausreichender Überdruck oder Unterdruck aufbaubar ist. Dass der Dampferzeugungsbehälter druckdicht ist, mag insbesondere druckdicht bis auf gezielt eingebrachte Öffnungen bedeuten. Die gezielt eingebrachten Öffnungen mögen beispielsweise ein Wasserauslass oder ein Anschluss für die Luftpumpe umfassen. Eine Wasserbefüllöffnung mag beispielweise durch einen Deckel druckdicht abgeschlossen werden. Insbesondere mag ein luftgefüllter Bereich des Dampferzeugungsbehälters mit der Luftpumpe verbunden sein.

Bei Unterdruck mag durch die Luftpumpe Wasser aus dem Wassertank durch die Verbindungsleitung in den Dampferzeugungsbehälter gesaugt werden, und zwar auch dann, wenn sich der Wassertank auf einer niedrigeren Position befindet als der Dampferzeugungsbehälter.

Bei Überdruck mag durch die Luftpumpe Wasser aus dem Dampferzeugungsbehälter durch die Verbindungsleitung zurück in den Wassertank gedrückt werden. Dadurch kann eine bessere Dosierung von Dampf erreicht werden, beispielsweise für den Fall, dass kein Dampf mehr erzeugt werden soll. Dann kann Wasser aus dem noch heißen Dampferzeugungsbehälter herausgedrückt werden und so eine Dampferzeugung vergleichsweise schnell beendet werden. Auch kann so einer Verkalkung des Dampferzeugungsbehälters entgegengewirkt werden.

Es ist noch eine weitere Ausgestaltung, dass der Dampferzeugungsbehälter einen verschließbaren Dampfauslass aufweist und die Verbindungsleitung verschließbar ist. Dadurch kann ein besonders hoher (Über- oder Unter-)Druck erzeugt werden, beispielsweise bevor die Verbindungsleitung geöffnet wird. Das Verschließen mag beispielsweise mittels entsprechender Ventile erfolgen. Der Dampfauslass oder eine daran angeschlossene Leitung mögen insbesondere in einen Garraum des Haushalts-Gargeräts führen.

Es ist auch eine Ausgestaltung, dass der Wassertank druckdicht ist und ein luftgefüllter Bereich des Wassertanks mit der Luftpumpe verbunden ist. Dadurch wird auf einfache Weise ein Erzeugen eines Überdrucks zum effektiven Drücken von Wasser aus dem Wassertank in den Dampferzeugungsbehälter und/oder eines hohen Unterdrucks zum Ansaugen von Wasser aus dem Dampferzeugungsbehälter in den Wassertank ermöglicht.

Es ist außerdem eine Ausgestaltung, dass die Verbindungsleitung verschließbar ist. Dadurch kann ein besonders hoher Druck aufgebaut werden, und es können der Zeitpunkt und die Menge des durch die Verbindungsleitung strömenden Wassers besonders genau eingestellt werden.

Es ist ferner eine Ausgestaltung, dass die Verbindungsleitung dauerhaft offen ist und die Luftpumpe bei Stillstand druckdicht ist. Hierbei kann auf ein Ventil in der Verbindungsleitung verzichtet werden, was eine besonders preiswerte Ausgestaltung ermöglicht.

Es ist darüber hinaus eine Ausgestaltung, dass der Druckunterschied mittels eines Heizvorgangs des Dampferzeugungsbehälters herstellbar ist. Dadurch kann auf eigenständige Druckerzeugungseinrichtungen, wie auf eine Luftpumpe oder einen Kompressor, verzichtet werden.

Es ist eine Ausgestaltung davon, dass mittels des Heizvorgangs ein Überdruck in dem Dampferzeugungsbehälter zum Drücken des Wassers in den Wassertank erzeugbar ist. Der Überdruck wird also durch den Dampfdruck bei aktiviertem Dampferzeugungsbehälter erzeugt, z.B. ähnlich einem unter Druck stehenden Kochtopf. Die Verbindungsleitung kann dabei absperrbar sein, z.B. mittels eines Ventils, oder mag dauerhaft offen sein. Während eines Druckaufbaus ist ein ggf. vorhandener Dampfauslass druckdicht abgesperrt.

Es ist noch eine Ausgestaltung davon, dass mittels des Heizvorgangs ein Unterdruck in dem Dampferzeugungsbehälter zum Ansaugen des Wassers aus dem Wassertank erzeugbar ist. Der Unterdruck kann beispielsweise dadurch hergestellt werden, dass der Dampferzeugungsbehälter im offenen Zustand, z.B. mit geöffnetem Dampfauslass, erhitzt wird, dann druckdicht abgesperrt wird und folgend abkühlt, z.B. durch Abschalten der Heizung des Dampferzeugungsbehälters. Mit Öffnen der Verbindungsleitung zum Wassertank kann dann Wasser aus dem Wassertank angesaugt werden.

Die Aufgabe wird auch gelöst durch ein entsprechendes Haushalts-Gargerät, z.B. Dampfgarer oder Dampfgarofen.

Die Aufgabe wird auch gelöst durch ein Verfahren zum Bewegen von Wasser zwischen einem heizbaren Dampferzeugungsbehälter und einem damit fluidisch verbundenen Wassertank eines Haushalts-Gargeräts, wobei das Wasser mittels eines Druckunterschieds zwischen dem Wassertank und dem Dampferzeugungsbehälter bewegt wird. Das Verfahren ergibt die gleichen Vorteile wie das oben beschriebene Dampferzeugungssystem und kann analog ausgestaltet werden.

Beispielsweise ist es eine Ausgestaltung, dass zum Erzeugen des Druckunterschieds ein Überdruck oder ein Unterdruck in dem Wassertank oder in dem Dampferzeugungsbehälter mittels einer Luftpumpe erzeugt wird.

Es ist eine andere Ausgestaltung, dass zum Erzeugen des Druckunterschieds ein Überdruck oder ein Unterdruck in dem Dampferzeugungsbehälter mittels seiner Erwärmung erzeugt wird.

In den folgenden Figuren wird die Erfindung anhand von Ausführungsbeispielen schematisch genauer beschrieben. Dabei können zur Übersichtlichkeit gleiche oder gleichwirkende Elemente mit gleichen Bezugszeichen versehen sein.
- Fig.1 bis 3: zeigen als Schnittdarstellung in Seitenansicht Skizzen eines jeweiligen Dampferzeugungssystems gemäß einem ersten bis dritten Ausführungsbeispiel unter Verwendung einer Luftpumpe; und
- Fig.4 und 5: zeigen als Schnittdarstellung in Seitenansicht Skizzen eines jeweiligen Dampferzeugungssystems gemäß einem vierten und fünften Ausführungsbeispiel ohne Verwendung einer Luftpumpe.

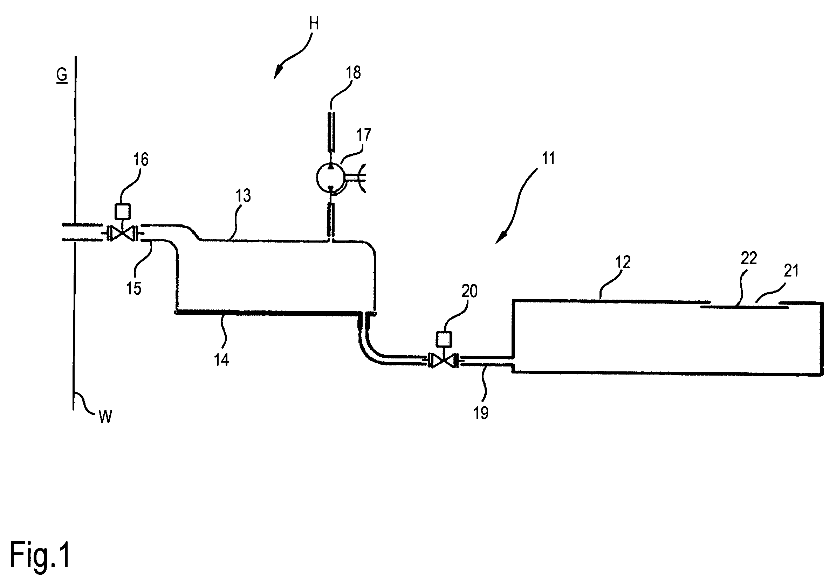

**Fig.1** zeigt ein erstes Dampferzeugungssystem 11 eines Haushalts-Gargeräts H, z.B. in Form eines Dampfgarers oder Dampfbackofens. Das Dampferzeugungssystem 11 weist einen Wassertank 12 und einen heizbaren Dampferzeugungsbehälter 13 auf. Der Dampferzeugungsbehälter 13 bzw. darin eingefülltes Wasser (o.Abb.) ist insbesondere mittels einer bodenseitig angebrachten Heizung 14 so stark erhitzbar, dass das flüssige Wasser in Dampf umgewandelt werden kann. Der Dampferzeugungsbehälter 13 mag insbesondere mit einer Füllstandsmesseinrichtung zum Bestimmen eines Vorhandenseins und/oder eines Füllstands des Wassers in dem Dampferzeugungsbehälter 13 ausgerüstet sein. Dampf kann durch einen Dampfauslass 15 in einen Garraum G eintreten. Der Dampfauslass 15 ist mittels eines druckdichten Ventils 16, insbesondere Elektroventils, wahlweise absperrbar und öffenbar. Der Dampferzeugungsbehälter 13 ist oberseitig ferner an eine Luftpumpe 17 angeschlossen, welche an ihrer nicht mit dem Dampferzeugungsbehälter 13 verbundenen Seite einen freien Ausgang 18 aufweist. Die Luftpumpe 17 ist hier bidirektional ausgebildet, kann also in dem Dampferzeugungsbehälter 13 sowohl einen Überdruck als auch einen Unterdruck herstellen. Das Dampferzeugungssystem 11 ist hinter einer Garraumwand W außerhalb des Garraums G positioniert.

Zur Befüllung mit Wasser ist der Dampferzeugungsbehälter 13 über eine fluidische Verbindungsleitung 19 mit dem Wassertank 12 verbunden. Der Wassertank 12 ist hier etwas tiefer angeordnet als der Dampferzeugungsbehälter 13. Die Verbindungsleitung 19 verläuft zwischen jeweiligen Bodenbereichen von Wassertank 12 und Dampferzeugungsbehälter 13. Die Verbindungsleitung 19 weist ferner zu ihrer Absperrung ein Ventil 20, insbesondere Elektroventil, auf. Der Wassertank 12 weist oberseitig eine Einfüllöffnung 21 für Wasser auf, welche mittels eines Deckels 22 verschließbar sein kann.

Zum Bewegen von Wasser aus dem Wassertank 12 in den Dampferzeugungsbehälter 13 wird das Ventil 16 und optional auch das Ventil 20 geschlossen, und es wird die Luftpumpe 17 so aktiviert, dass sie Luft aus dem Dampferzeugungsbehälter 13 absaugt. Dadurch wird in dem ansonsten druckdichten Dampferzeugungsbehälter 13 ein Unterdruck erzeugt. Folgend wird das Ventil 20 der Verbindungsleitung 19 geöffnet und so Wasser aus dem Wassertank 12 angesaugt. Wenn der gewünschte Wasserpegel erreicht ist, schließt das Ventil 20 wieder und die Luftpumpe 17 wird angehalten. Die Luftpumpe 17 mag im angehaltenen Zustand druckdicht oder luftdurchlässig sein.

Zum Erzeugen von Dampf aus Wasser wird folgend die Heizung 14 aktiviert und das Wasser erhitzt, insbesondere zum Kochen gebracht. Zur Befüllung des Garraums G mit dem Dampf wird das Ventil 16 geöffnet.

Zum Nachfüllen von Wasser in dem Dampferzeugungsbehälter 13 wird das Ventil 16 wieder geschlossen, die Luftpumpe 17 aktiviert und bei ausreichendem Unterdruck das Ventil 20 der Verbindungsleitung 19 wieder geöffnet.

Zum Entleeren des Dampferzeugungsbehälters 13 mag einfach das Ventil 20 der Verbindungsleitung 19 geöffnet werden, wenn der Bodenbereich des Dampferzeugungsbehälters 13 höher liegt als ein maximaler Pegel des Wassertanks 12. In diesem Fall mag die Luftpumpe 17 auch eine unidirektional nur Unterdruck aufbauende Luftpumpe sein. Zusätzlich und in den Fällen, dass der Bodenbereich des Dampferzeugungsbehälters 13 nicht höher liegt als ein maximaler Pegel des Wassertanks 12, kann die Luftpumpe 17 einen Überdruck in dem Dampferzeugungsbehälter 13 erzeugen, welcher das Wasser zurück in den Wassertank 12 drückt. Dazu sind bevorzugt die Ventile 16 und 20 geschlossen, der Überdruck wird aufgebaut, und das Wasser fließt in den Wassertank 12 durch die Verbindungsleitung 19.

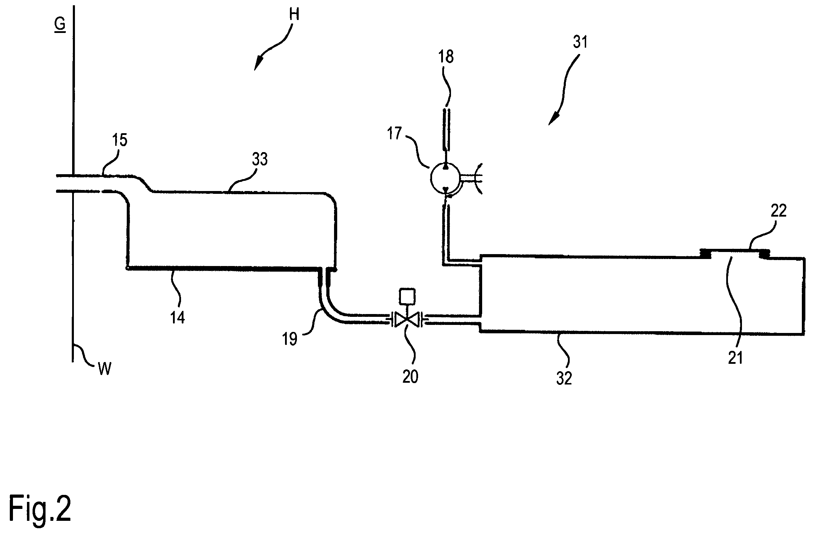

**Fig.2** zeigt ein zweites in das Haushalts-Gargerät H einbaubares Dampferzeugungssystem 31. Im Gegensatz zu dem Dampferzeugungssystem 11 ist die Luftpumpe 17 nun mit dem Wassertank 32 verbunden, nicht mehr mit dem Dampferzeugungsbehälter 33. Das Ventil 16 des Dampfauslasses 15 mag vorhanden sein oder mag, wie gezeigt, entfallen. Der Deckel 22 ist insbesondere druckdicht auf die Einfüllöffnung 21 aufsetzbar.

Zum Befüllen oder Nachfüllen des Dampferzeugungsbehälters 33 mögen die Fälle unterschieden werden, dass (a) der Wassertank 32 so tief angebracht ist, dass bei geöffnetem Ventil 20 in der Verbindungsleitung 19 Wasser eigenständig von dem Dampferzeugungsbehälter 33 in den Wassertank 32 zurückfließen kann ("tiefer liegender Wassertank"), dass (b) der Wassertank 32 auf einer zum Dampferzeugungsbehälter 33 ähnlichen Höhe angebracht ist, so dass bei geöffnetem Ventil 20 in der Verbindungsleitung 19 Wasser sowohl in dem Dampferzeugungsbehälter 33 als auch in dem Wassertank 32 verbleiben kann ("gleich hoher Wassertank") oder dass im Fall (c) der Wassertank 32 so hoch angebracht ist, dass bei geöffnetem Ventil 20 in der Verbindungsleitung 19 Wasser eigenständig von dem Wassertank 32 in den Dampferzeugungsbehälter 33 fließen kann ("höher liegender Wassertank").

Für den Fall (a) des tiefer liegenden Wassertanks 32 mag die Luftpumpe 17 insbesondere eine unidirektional arbeitende, nur Überdruck im Wassertank 32 erzeugende Luftpumpe 17 sein oder mag eine bidirektional arbeitende, dort Über- und Unterdruck erzeugende Luftpumpe 17 sein. Zum Befüllen des Dampferzeugungsbehälters 33 mag die Luftpumpe 17 Überdruck in dem Wassertank 32 erzeugen und bei geöffnetem Ventil 20 das Wasser in den Dampferzeugungsbehälter 33 drücken. Das Vorhandensein des Ventils 20 weist den Vorteil auf, dass es erstens ein besonders hohes Druckniveau in dem Wassertank 32 erlaubt und zweitens eine besonders genaue Dosierung. Zudem wird bei geschlossenem Ventil 20 ein Zurückfließen auch geringer Mengen an Wasser aus dem Dampferzeugungsbehälter 33 in den Wassertank 32 sicher verhindern. Mit Erreichen eines gewünschten Füllstands in dem Dampferzeugungsbehälter 33 werden das Ventil 20 geschlossen und die Luftpumpe 17 angehalten. Zum Entleeren des Dampferzeugungsbehälters 33 mag einfach das Ventil 20 geöffnet werden, oder die Luftpumpe 17 erzeugt zum schnelleren und gründlicheren Entleeren einen Unterdruck in dem Wassertank 32, falls die Luftpumpe 17 eine bidirektionale Luftpumpe 17 ist.

Für den Fall (b) des gleich hoch positionierten Wassertanks 32 kann in analoger Weise zum Fördern des Wassers aus dem Wassertank 32 in den Dampferzeugungsbehälter 33 die Luftpumpe 17 einen Überdruck in dem Wassertank 32 erzeugen, zum Abführen des Wassers aus dem Dampferzeugungsbehälters 33 einen Unterdruck.

Für den Fall (c) des höher liegenden Wassertanks 32 kann in analoger Weise zum Fließen des Wassers aus dem Wassertank 32 in den Dampferzeugungsbehälter 33 entweder einfach das Ventil 20 geöffnet werden oder zusätzlich für eine schnellere und effektivere Nachfüllung die Luftpumpe 17 einen Überdruck in dem Wassertank 32 erzeugen. Zum Abführen des Wassers aus dem Dampferzeugungsbehälters 33 mag die Luftpumpe 17 einen Unterdruck erzeugen.

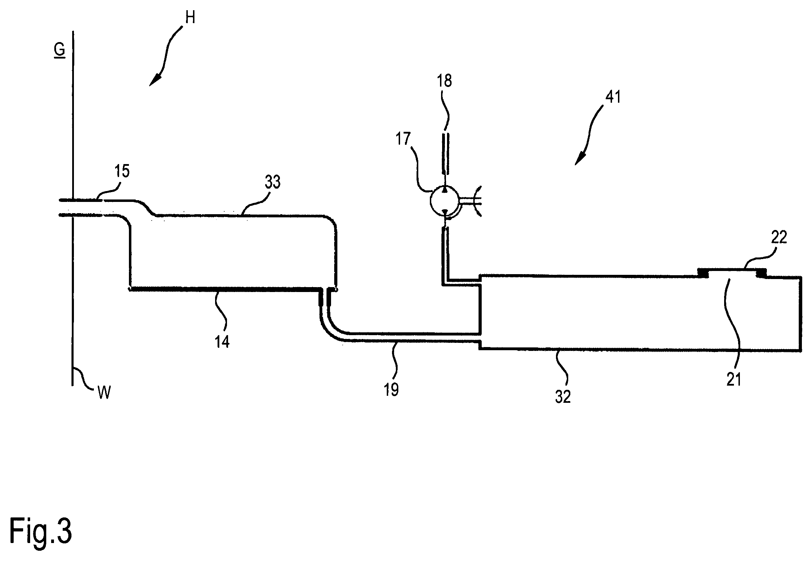

**Fig.3** zeigt ein drittes in das Haushalts-Gargerät H einbaubares Dampferzeugungssystem 41. Das Dampferzeugungssystem 41 ist ähnlich zu dem Dampferzeugungssystem 31 aufgebaut, verzichtet jedoch aus Kostengründen auf das Ventil 20, mag also insbesondere ganz ohne die Ventile 16, 20 auskommen. Dass Wasser ungehindert durch die Verbindungsleitung 19 fließen kann, kann dadurch verhindert werden, dass der Wassertank 32 bis auf die Anschlüsse zu der Verbindungsleitung 19 und zu der Luftpumpe 17 druckdicht ist und zudem die Luftpumpe 17 druckdicht ist, wenn sie nicht im Betrieb ist bzw. stillsteht. Dadurch kann ein Überdruck oder Unterdruck auch über einen längeren Zeitraum aufrecht erhalten werden welcher ausreicht, um einen Wasserfluss durch die Verbindungsleitung 19 zu verhindern. Ggf. mag die Luftpumpe 17 zum Ausgleich einer ungewünschten Druckreduzierung in dem Wassertank 32 kurzzeitig aktiviert werden.

Allgemein mag ein Füllstand des Wassers in dem Dampferzeugungssystem 31 mittels eines Füllstandssensors (o.Abb.) festgestellt werden, z.B. mittels eines Schwimmers. Alternativ mag der Füllstand in dem Dampferzeugungssystem 41 mittels eines Luftdrucksensors im Wassertank 32 festgestellt werden, wenn das Wasser in dem Wassertank 32 und das Wasser in dem Dampferzeugungsbehälter 33 über eine insbesondere dauernd offene Verbindungsleitung 19 in hydraulischer Verbindung miteinander stehen, insbesondere nach dem Prinzip kommunizierender Röhren. Wird dann in dem Wassertank 32 ein Überdruck geschaffen, fließt Wasser aus dem Wassertank 32 in den Dampferzeugungsbehälter 33. Wird das Wasser in dem Dampferzeugungsbehälter 33 verdampft, verringert sich das Volumen des flüssigen Wassers, und Wasser strömt selbsttätig aus dem Wassertank 32 nach. Dadurch verringert sich das Volumen des Wassers in dem Wassertank 32, so dass auch der Luftdruck sinkt. Sinkt der Luftdruck in dem Wassertank unter einen vorbestimmten Wert, korreliert dies mit einem Absinken des Wasserstands in dem Dampferzeugungsbehälter 33 unter einen vorbestimmten Wert. Ist dieser Wert ein minimaler Wert, kann die Luftpumpe 17 zur Erhöhung des Luftdrucks in dem Wassertank 32 und damit zur Erhöhung eines Wasserstands in dem Dampferzeugungsbehälter 33 aktiviert werden, z.B. bis ein vorbestimmter höherer Luftdruck erreicht ist.

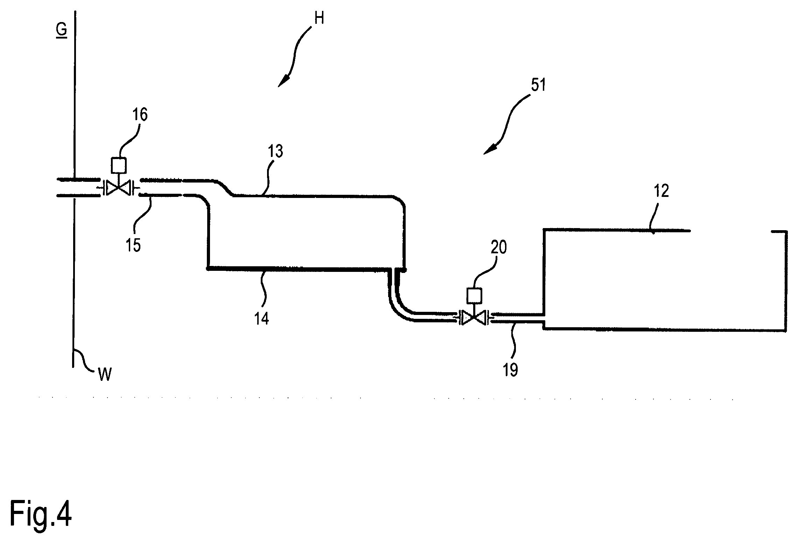

**Fig.4** zeigt ein viertes in das Haushalts-Gargerät H einbaubares Dampferzeugungssystem 51. Das Dampferzeugungssystem 51 ist ähnlich zu dem ersten Dampferzeugungssystem 11 aufgebaut, verzichtet jedoch auf die Luftpumpe. Bei dem Dampferzeugungssystem 51 wird ein Druck, d.h. ein Überdruck und/oder ein Unterdruck, in dem Dampferzeugungsbehälter 13 hergestellt, und zwar mittels eines Heizvorgangs des Dampferzeugungsbehälters 13. Der Wassertank 12 ist hier beispielhaft auf gleicher Höhe angeordnet wie der Dampferzeugungsbehälter 13. Der Wassertank 12 braucht nicht druckdicht zu sein.

Zum Füllen des Dampferzeugungsbehälters 13 wird dieser bei geöffnetem Ventil 16, aber geschlossenem Ventil 20 erwärmt bzw. deren Heizung 14 aktiviert, so dass sich die darin befindliche Luft erwärmt, dadurch ausdehnt und aus dem Dampfauslass 15 entweichen kann. Folgend werden erstens das Ventil 16 geschlossen und so der Dampfauslass 15 abgesperrt und zweitens die Heizung 14 ausgeschaltet. Dadurch kühlt sich die Luft in dem dann druckdichten Dampferzeugungsbehälter 13 ab und erzeugt einen Unterdruck. Als nächstes wird das Ventil 20 der Verbindungsleitung 19 geöffnet und Wasser aus dem Wassertank 12 angesaugt. Wenn der gewünschte Füllstand oder Wasserpegel in dem Dampferzeugungsbehälter 13 erreicht ist, wird das Ventil 20 wieder geschlossen. Der Dampferzeugungsbehälter 13 ist nun zur Dampferzeugung bereit, wozu auch das Ventil 16 geöffnet werden kann.

Zum Nachfüllen von Wasser wird die Heizung 14 deaktiviert und das Ventil 16 geschlossen. Dadurch kühlen sich die Luft und der Dampf in dem Dampferzeugungsbehälter 13 ab, um einen Unterdruck für ein erneutes Ansaugen von Wasser aus dem Wassertank 12 zu erzeugen.

Zum Entleeren des Dampferzeugungsbehälters 13 werden das Ventil 16 und damit der Dampfauslass 15 geschlossen und das Ventil 20 und damit die Verbindungsleitung 19 geöffnet. Außerdem wird die Heizung 14 zum Aktivieren des Dampferzeugungsbehälters 13 aktiviert. So wird in dem Dampferzeugungsbehälter 13 ein Überdruck erzeugt, welcher das Wasser zurück in den Wassertank 12 drückt, z.B. so lange, bis der Dampferzeugungsbehälter 13 vollständig entleert ist. Folgend mag die Heizung 14 wieder deaktiviert werden und das Ventil 20 geschlossen werden.

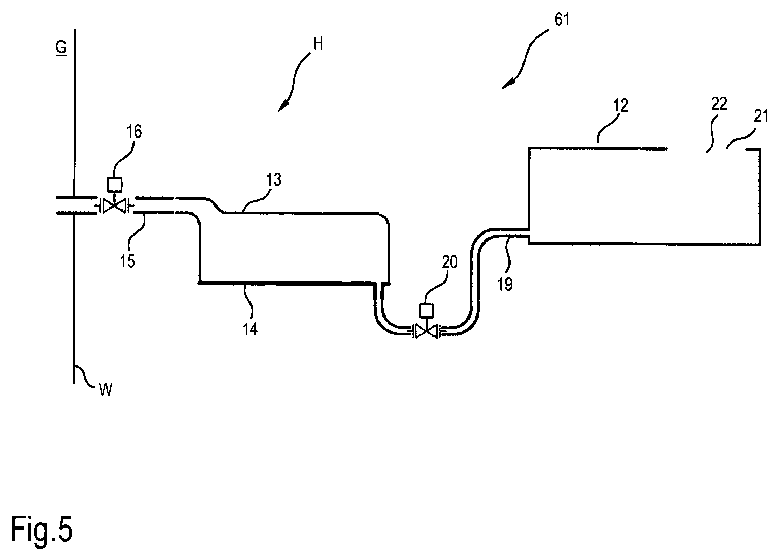

**Fig.5** zeigt ein fünftes in das Haushalts-Gargerät H einbaubares Dampferzeugungssystem 61. Das Dampferzeugungssystem 61 ist ähnlich zu dem vierten Dampferzeugungssystem 51 aufgebaut, wobei nun der Wassertank 12 aber ein höher liegender Wassertank 12 ist.

Zum Füllen und Nachfüllen des Dampferzeugungsbehälters 13 braucht nur das Ventil 20 der Verbindungsleitung 19 geöffnet zu werden, zur schnelleren Füllung bei geöffnetem Ventil 16.

Zum Entleeren des Dampferzeugungsbehälters 13 werden das Ventil 16 und damit der Dampfauslass 15 geschlossen und das Ventil 20 und damit die Verbindungsleitung 19 geöffnet. Außerdem wird die Heizung 14 zum Aktivieren des Dampferzeugungsbehälters 13 aktiviert. So wird in dem Dampferzeugungsbehälter 13 ein Überdruck erzeugt, welcher das Wasser zurück in den Wassertank 12 drückt, z.B. so lange, bis der Dampferzeugungsbehälter 13 vollständig entleert ist. Folgend mag die Heizung 14 wieder deaktiviert werden und das Ventil 20 geschlossen werden.

Selbstverständlich ist die vorliegende Erfindung nicht auf die gezeigten Ausführungsbeispiele beschränkt.

So können allgemein sowohl Dampferzeugungsbehälter als auch der Wassertank an eine Luftpumpe anschließbar sein. Dies kann beispielsweise abwechselnd geschehen durch Verwendung eines entsprechenden Steuerventils, welches die Luftpumpe abwechselnd mit einem der beiden Behälter verbindet. Auch mögen z.B. gleichzeitig eine Druckseite der Luftpumpe mit einem der beiden Behälter und eine Saugseite der Luftpumpe mit dem anderen der beiden Behälter verbunden sein. Alternativ mag z.B. jeder der beiden Behälter, d.h., der Dampferzeugungsbehälter und der Wassertank, mit einer jeweiligen Luftpumpe verbunden sein.

Allgemein kann die Erfindung einen oder mehrere der folgenden Vorteile aufweisen: Es wird keine Wasserpumpe benötigt, welche sich durch Kalk festsetzen kann. Die Luftpumpe, insbesondere deren mechanischen Teile, kommen weder mit Kalk, Wasser oder Entkalkungsmittel in Berührung. Die Kalkpartikel, die in dem Dampferzeugungsbehälter produziert werden, können problemlos in den Wassertank zurück gefördert oder bewegt werden. Die mechanischen Teile der Luftpumpe brauchen nicht lebensmittelecht zu sein. Die Luftpumpe kommt nicht mit heißem Wasser in Berührung. Insbesondere falls der Wassertank höher liegt als der Dampferzeugungsbehälter, kann eine einfache Vakuum-Pumpe benutzt werden. Zudem ist eine Luftpumpe sind im Vergleich zu einer Wasserpumpe deutlich leiser, insbesondere im Vergleich zu einem Trockenlauf der Wasserpumpe.

### Bezugszeichenliste

- 11: Dampferzeugungssystem
- 12: Wassertank
- 13: Dampferzeugungsbehälter
- 14: Heizung
- 15: Dampfauslass
- 16: Ventil
- 17: Luftpumpe
- 18: Ausgang
- 19: Verbindungsleitung
- 20: Ventil
- 21: Einfüllöffnung
- 22: Deckel
- 31: Dampferzeugungssystem
- 32: Wassertank
- 33: Dampferzeugungsbehälter
- 41: Dampferzeugungssystem
- 51: Dampferzeugungssystem
- 61: Dampferzeugungssystem
- G: Garraum
- H: Haushalts-Gargerät
- W: Garraumwand

## Patentansprüche

1. Dampferzeugungssystem (11; 31; 41; 51; 61) für ein Haushalts-Gargerät (H), aufweisend
- einen Wassertank (12; 32) und
- einen heizbaren Dampferzeugungsbehälter (13; 33), welcher über eine Verbindungsleitung (19) mit Wasser aus dem Wassertank (12; 32) nachfüllbar ist,
**dadurch gekennzeichnet, dass**
- das Wasser mittels eines Luftdruckunterschieds zwischen dem Wassertank (12; 32) und dem Dampferzeugungsbehälter (13; 33) bewegbar ist.

2. Dampferzeugungssystem (11; 31; 41) nach Anspruch 1, **dadurch gekennzeichnet, dass** das Dampferzeugungssystem (11; 31; 41) mindestens eine Luftpumpe (17) aufweist.

3. Dampferzeugungssystem (11) nach Anspruch 2, **dadurch gekennzeichnet, dass** der Dampferzeugungsbehälter (13) druckdicht und mit der Luftpumpe (17) verbunden ist.

4. Dampferzeugungssystem (11; 31; 51; 61) nach Anspruch 3, **dadurch gekennzeichnet, dass** der Dampferzeugungsbehälter (12; 33) einen verschließbaren Dampfauslass (15, 16) aufweist und die Verbindungsleitung (19, 20) verschließbar ist.

5. Dampferzeugungssystem (11) nach Anspruch 2, **dadurch gekennzeichnet, dass** der Wassertank (12) druckdicht und mit der Luftpumpe (17) verbunden ist.

6. Dampferzeugungssystem (11; 31) nach Anspruch 5, **dadurch gekennzeichnet, dass** die Verbindungsleitung (19) verschließbar ist.

7. Dampferzeugungssystem (41) nach Anspruch 5, **dadurch gekennzeichnet, dass** die Verbindungsleitung (19) offen ist und die Luftpumpe (17) bei Stillstand druckdicht ist.

8. Dampferzeugungssystem (51; 61) nach Anspruch 1, **dadurch gekennzeichnet, dass** der Druckunterschied mittels eines Heizvorgangs des Dampferzeugungsbehälters (33) herstellbar ist.

9. Dampferzeugungssystem (51; 61) nach Anspruch 8, **dadurch gekennzeichnet, dass** mittels des Heizvorgangs ein Überdruck in dem Dampferzeugungsbehälter (33) zum Drücken des Wassers in den Wassertank (32) erzeugbar ist.

10. Dampferzeugungssystem (51) nach einem der Ansprüche 8 oder 9, **dadurch gekennzeichnet, dass** mittels des Heizvorgangs ein Unterdruck in dem Dampferzeugungsbehälter (33) zum Ansaugen des Wassers aus dem Wassertank (32) erzeugbar ist.

11. Verfahren zum Bewegen von Wasser zwischen einem heizbaren Dampferzeugungsbehälter (13; 33) und einem damit fluidisch verbundenen Wassertank (12; 32) eines Haushalts-Gargeräts (H), **dadurch gekennzeichnet, dass** ein Unterschied im Luftdruck zwischen dem Wassertank (12; 32) und dem Dampferzeugungsbehälter (13; 33) erzeugt wird und dadurch das Wasser bewegt wird.

12. Verfahren nach Anspruch 11, **dadurch gekennzeichnet, dass** zum Erzeugen des Druckunterschieds ein Überdruck oder ein Unterdruck in dem Wassertank (12; 32) oder in dem Dampferzeugungsbehälter (13; 33) mittels einer Luftpumpe (17) erzeugt wird.

13. Verfahren nach Anspruch 11, **dadurch gekennzeichnet, dass** zum Erzeugen des Druckunterschieds ein Überdruck oder ein Unterdruck in dem Dampferzeugungsbehälter (33) mittels seiner Erwärmung erzeugt wird.

## Claims

1. System for generating steam (11; 31; 41; 51; 61) for a domestic cooking device (H), having
- a water tank (12; 32) and
- a heatable container for generating heat (13; 33), which can be refilled with water from the water tank (12; 32) by way of a connecting pipe (19),
**characterised in that**
- the water can be moved between the water tank (12; 32) and the container for generating heat (13; 33) by means of an air pressure difference.

2. System for generating steam (11; 31; 41) according to claim 1, **characterised in that** the system for generating steam (11; 31; 41) has at least one air pump (17).

3. System for generating steam (11) according to claim 2, **characterised in that** the container for generating steam (13) is pressure tight and is connected to the air pump (17).

4. System for generating steam (11; 31; 51; 61) according to claim 3, **characterised in that** the container for generating steam (12; 33) has a closable steam outlet (15, 16) and the connecting pipe (19, 20) can be closed.

5. System for generating steam (11) according to claim 2, **characterised in that** the water tank (12) is pressure tight and is connected to the air pump (17).

6. System for generating steam (11; 31) according to claim 5, **characterised in that** the connecting pipe (19) can be closed.

7. System for generating steam (41) according to claim 5, **characterised in that** the connecting pipe (19) is open and the air pump (17) is pressure tight when idle.

8. System for generating steam (51; 61) according to claim 1, **characterised in that** the pressure difference can be established by means of a heating process of the container for generating steam (33).

9. System for generating steam (51; 61) according to claim 8, **characterised in that** an overpressure can be generated, by means of the heating process, in the container for generating steam (33) in order to push the water into the water tank (32).

10. System for generating steam (51) according to one of claims 8 or 9, **characterised in that** a low pressure can be generated, by means of the heating process, in the container for generating steam (33) in order to take in water from the water tank (32).

11. Method for moving water between a heatable container for generating steam (13; 33) and a water tank (12; 32) of a domestic cooking device (H) connected fluidically thereto, **characterised in that** a difference in the air pressure is generated between the water tank (12; 32) and the container for generating steam (13; 33) and water is moved as a result.

12. Method according to claim 11, **characterised in that** in order to generate the pressure difference an overpressure or a low pressure in the water tank (12; 32) or in the container for generating steam (13; 33) is generated by means of an air pump (17).

13. Method according to claim 11, **characterised in that** in order to generate the pressure difference an overpressure or a low pressure is generated in the container for generating steam (33) by means of it heating up.

## Revendications

1. Système de production de vapeur (11 ; 31 ; 41 ; 51 ; 61) pour un appareil ménager de cuisson (H) présentant
- un réservoir d'eau (12 ; 32) et
- un réservoir chauffable de production de vapeur (13 ; 33), lequel est remplissable avec de l'eau en provenance du réservoir d'eau (12 ; 32) par l'intermédiaire d'une conduite de liaison (19),
**caractérisé en ce que**
- l'eau est déplaçable entre le réservoir d'eau (12 ; 32) et le réservoir de production de vapeur (13 ; 33) au moyen d'une différence de pression d'air.

2. Système de production de vapeur (11 ; 31 ; 41) selon la revendication 1, **caractérisé en ce que** le système de production de vapeur (11 ; 31 ; 41) présente au moins une pompe à air (17).

3. Système de production de vapeur (11) selon la revendication 2, **caractérisé en ce que** le réservoir de production de vapeur (13) est étanche à la pression et est relié à la pompe à air (17).

4. Système de production de vapeur (11 ; 31 ; 51 ; 61) selon la revendication 3, **caractérisé en ce que** le réservoir de production de vapeur (13 ; 33) présente une sortie de vapeur (15, 16) pouvant être fermée et **en ce que** la conduite de liaison (19 ; 20) peut être fermée.

5. Système de production de vapeur (11) selon la revendication 2, **caractérisé en ce que** le réservoir d'eau (12) est étanche à la pression et est relié à la pompe à air (17).

6. Système de production de vapeur (11 ; 31) selon la revendication 5, **caractérisé en ce que** la conduite de liaison (19) peut être fermée.

7. Système de production de vapeur (41) selon la revendication 5, **caractérisé en ce que** la conduite de liaison (19) est ouverte et **en ce que** la pompe à air (17) est étanche à la pression en cas d'immobilisation.

8. Système de production de vapeur (51 ; 61) selon la revendication 1, **caractérisé en ce que** la différence de pression peut être établie au moyen d'une opération de chauffage du réservoir de production de vapeur (33).

9. Système de production de vapeur (51 ; 61) selon la revendication 8, **caractérisé en ce qu'**une surpression dans le réservoir de production de vapeur (33) peut être produite au moyen de l'opération de chauffage pour presser l'eau dans le réservoir d'eau (32).

10. Système de production de vapeur (51) selon l'une quelconque des revendications 8 ou 9, **caractérisé en ce qu'**une sous-pression dans le réservoir de production de vapeur (33) peut être produite au moyen de l'opération de chauffage pour aspirer l'eau hors du réservoir d'eau (32).

11. Procédé de déplacement d'eau entre un réservoir chauffable de production de vapeur (13 ; 33) et un réservoir d'eau (12 ; 32), relié fluidiquement à celui-là, d'un appareil ménager de cuisson (H), **caractérisé en ce qu'**une différence dans la pression d'air entre le réservoir d'eau (12 ; 32) et le réservoir de production de vapeur (13 ; 33) est produite et **en ce que** l'eau est ainsi déplacée.

12. Procédé selon la revendication 11, **caractérisé en ce que** pour produire la différence de pression, une surpression ou une sous-pression est générée dans le réservoir d'eau (12 ; 32) ou dans le réservoir de production de vapeur (13 ; 33) au moyen d'une pompe à air (17).

13. Procédé selon la revendication 11, **caractérisé en ce que** pour produire la différence de pression, une surpression ou une sous-pression est générée dans le réservoir de production de vapeur (33) au moyen de son échauffement.
